**Europäisches Patentamt**

**European Patent Office**

**Office européen des brevets**

(11) Veröffentlichungsnummer: **0 054 856**
A1

# (12) EUROPÄISCHE PATENTANMELDUNG

(21) Anmeldenummer: 81110330.8

(22) Anmeldetag: 11.12.81

(51) Int. Cl.³: **E 04 C 2/36**, E 04 C 2/54

(30) Priorität: 23.12.80 DE 3048695

(43) Veröffentlichungstag der Anmeldung: 30.06.82
Patentblatt 82/26

(84) Benannte Vertragsstaaten: AT CH DE FR GB IT LI NL

(71) Anmelder: BAYER AG, Zentralbereich Patente, Marken und Lizenzen, D-5090 Leverkusen 1, Bayerwerk (DE)

(72) Erfinder: Zygan, Hieronymus, Dr., Zum Hahnenberg 48, D-5068 Odenthal (DE)
Erfinder: Winchenbach, Helmut, Dipl.-Ing., Eibenweg 11, D-4005 Meerbusch (DE)

(54) **Stegdoppelplatten.**

(57) Schrägstegmehrfachplatte aus einem thermoplastischen Kunststoff, bestehend aus mindestens zwei in einem vorgegebenen Abstand parallel angeordneten Kunststoffplatten, die durch dazwischen angeordnete Stege verbunden sind, wobei mindestens einige Stege mit den Platten einen Winkel zwischen 75 - 25°, bevorzugt 40 - 50° bilden, und jeweils mindestens zwei Stege an der gleichen oder nahezu gleichen Stelle einer Platte befestigt sind.

EP 0 054 856 A1

BAYER AKTIENGESELLSCHAFT     5090 Leverkusen, Bayerwerk
Zentralbereich     G/Rz    0054856
Patente, Marken und Lizenzen

## Stegdoppelplatten

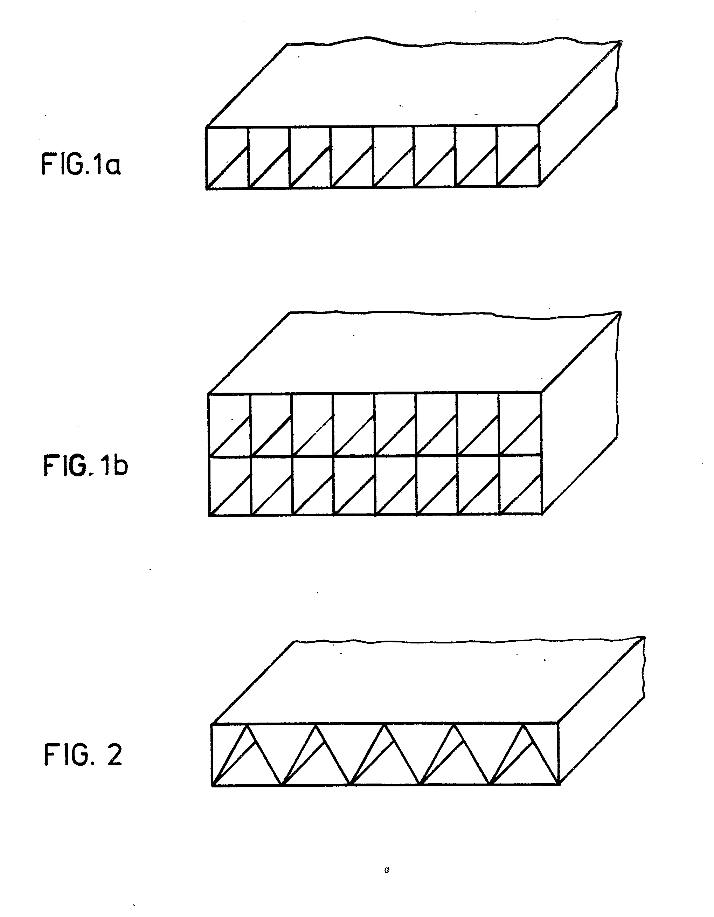

Gegenstand der Erfindung sind Stegdoppelplatten aus thermoplastischen Kunststoffen und Verfahren zu ihrer Herstellung.
Stegdoppelplatten und allgemeine Stegmehrfachplatten, insbesondere auch Stegdreifachplatten aus Kunststoffen sind an
sich bekannt. Sie bestehen aus zwei, drei oder mehr in
vorgegebenen Abständen parallel angeordneten Kunststoffplatten, die durch dazwischen angeordnete, parallel zueinander verlaufende Stege verbunden sind, wobei die Ebenen
der Stege zu den Plattenebenen senkrecht stehen. Die Stege
sind normalerweise in regelmäßigen Abständen angeordnet
(Fig. 1a, b). Obwohl weiterhin nur von Stegdoppelplatten
gesprochen wird, gelten die folgenden Ausführungen sinngemäß auch für Stegmehrfachplatten. Stegdoppelplatten haben
in der Richtung der Stege eine sehr große Biegesteifigkeit
bei sehr geringem Materialeinsatz und damit sehr geringem
Gewicht. In Verbindung mit ihrer sehr wirtschaftlichen
Herstellung durch fortlaufende Extrusion, die die Richtung
der Stege bestimmt, stellen sie daher einen wichtigen technischen Fortschritt dar.

Allerdings ist die Biegesteifigkeit solcher Platten quer
zur Richtung der Stege wesentlich geringer als in Richtung
der Stege. Ebenfalls erweist sich, daß die Torsionssteifigkeit einer Stegdoppelplatte verhältnismäßig gering ist.
Dieses anisotrope Verhalten der Biegesteifigkeit einer
Stegdoppelplatte ist für bestimmte Anwendungen außerordentlich nachteilig. Diese Nachteile könnte man dadurch beseitigen, daß man neben der Schar von parallel laufenden

Le A 20 779 - Europa

Stegen noch eine zweite Schar von senkrecht dazu verlaufenden Stegen anordnet, d.h., eine Kreuzstegdoppelplatte herstellen würde. Nun läßt die Forderung nach der zweiten Schar von senkrecht verlaufenden Stegen aber nicht zu, daß Kreuzstegdoppelplatten in der von den Stegdoppelplatten her bekannten Weise extrudiert werden können.

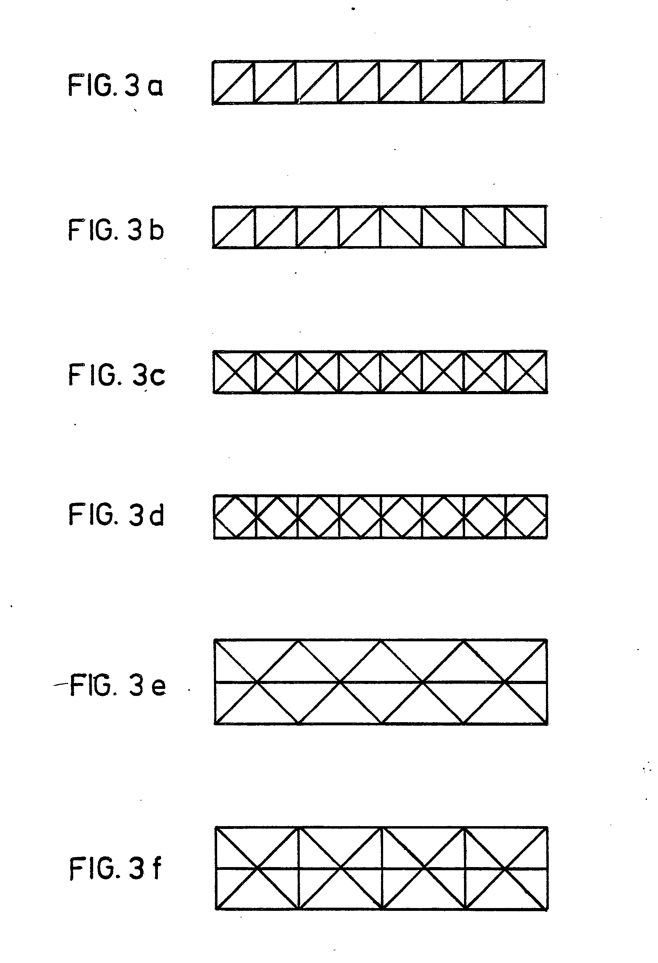

Erfindungsgemäß können die Vorteile der Kreuzstegdoppelplatte mit der einfachen Herstellbarkeit extrudierter Stegdoppelplatten dadurch vereinigt werden, daß die Ebenen zumindest eines Teils der Stege nicht mehr senkrecht auf den Ebenen der Platten stehen, sondern mit diesen einen von 90° verschiedenen, bevorzugt zwischen 75 - 25° liegenden Winkel bilden, und mindestens jeweils zwei Stege mit ein und derselben oder nahezu derselben Stelle einer Kunststoffplatte verbunden sind. Man spricht von einer Schrägstegdoppelplatte, wie sie beispielsweise in Fig. 2 wiedergegeben ist.

Die Steifigkeit einer Schrägstegdoppelplatte in Richtung der Stege und senkrecht dazu kann bei geeigneter Wahl der Abmessungen der beiden Platten und der Stege, sowie der Winkel, die von den Ebenen der Stege mit den Ebenen der Platten gebildet werden, nahezu gleich gemacht werden. Außerdem wird dann gleichzeitig die Torsionssteifigkeit verbessert.

Neben der mit Fig. 2 gegebenen Ausführungsform einer Schrägstegdoppelplatte sind noch viele andere Anordnungen von Stegen möglich, die alle dadurch gekennzeichnet sind, daß mindestens einer der Stege in jedem periodisch wiederkehrenden Abschnitt schräggestellt ist. Einige Beispiele für Querschnitte sind in Fig. 3a bis 3d gegeben.

Le A 20 779

- 3 -

Ein weiterer Gegenstand der Erfindung ist ein Verfahren zur Herstellung einer Schrägstegdoppelplatte, das daraus besteht, daß man einen thermoplastischen Kunststoff durch ein dem Profil der Schrägstegdoppelplatte entsprechendes Werkzeug extrudiert. Alle in Fig. 2 und 3a bis 3d angegebenen Querschnittsprofile, deren relative Abmessungen in verschiedenster Weise noch variiert werden können, lassen sich durch geeignete Breitschlitzdüsen ebenso wirtschaftlich extrudieren wie die bekannten Stegmehrfachplatten.

Zur Herstellung der Schrägstegdoppelplatten kann man die üblichen Methoden der Thermoplastverarbeitung durch Extrusion anwenden. Die Arbeitsbedingungen müssen natürlich auf den verwendeten Kunststoff eingestellt werden. Diese Kunststoffe können die üblichen Zusätze wie Verstärkungsstoffe, Gleitmittel, Stabilisatoren, Füllstoffe und Farbpigmente enthalten. Ein gezieltes Einbringen dieser Zusätze in Teilbereiche des Profils ist möglich, z.B.eine Verstärkung der Platten durch Glasfasern nach dem Verfahren der Coextrusion. Weiterhin kann das Profil aus einer Kombination verschiedener Kunststoffe aufgebaut werden, die jeweils in Teilbereichen des Profils eingesetzt werden.
Eine Kombination des Profils mit Deckschichten aus Metall, Kunststoff oder anderen Materialien ist möglich, z.B. durch Beschichten, Laminieren oder Kaschieren.

Bei der Verwendung von Schrägstegmehrfachplatten mit mehr als zwei Platten besteht die Möglichkeit, verschiedenartige Profilformen zwischen jeweils zwei benachbarten Platten anzuordnen.

Le A 20 779

- 4 -

Das Ausschäumen der Hohlkammern während der Extrusion oder anschließend in einem getrennten Arbeitsgang ist möglich.

Zur Herstellung der Schrägstegdoppelplatten sind im Prinzip alle thermoplastischen Kunststoffe geeignet, insbesondere transparente und lichtdurchlässige Kunststoffe. Beispiele sind Polyolefine wie Polyethylen und Polypropylen, Vinylhalogenidpolymerisate wie Polyvinylchlorid, Polyamide wie Polyamid 6 und Polyamid 6,6, Polyurethane, aromatische Polyester wie Polyalkylen- und Polybutylenterephthalat; Polyacrylate- und -Methacrylate wie Polymethylmethacrylat, ABS-Kunststoffe, aromatische Polycarbonate wie Bisphenol-A-Polycarbonat, Polyvinylaromaten wie Polystyrol. Alle können Füllstoffe, Pigmente und Verstärkerfüllstoffe wie Glasfasern enthalten.

Die Schrägstegdoppelplatten können für alle Zwecke verwendet werden, für die man bisher Stegdoppelplatten eingesetzt hat. Zusätzlich können sie da eingesetzt werden, wo es auf gleiches Steifigkeitsverhalten in allen Richtungen (Isotropie) und auf die Torsionssteifigkeit ankommt. Ein Beispiel für eine solche Anwendung ist als lichtdurchlässige Scheibe in Gewächshäusern.

Le A 20 779

Patentansprüche:

1. Schrägstegmehrfachplatte aus einem thermoplastischen
   Kunststoff, bestehend aus mindestens zwei in einem vorgegebenen Abstand parallel angeordneten Kunststoffplatten, die durch dazwischen angeordnete Stege verbunden sind, wobei mindestens einige Stege mit den Platten einen
   von $90^o$ verschiedenen, bevorzugt zwischen 75 - $25^o$, besonders
   bevorzugt zwischen 40 - $50^o$ liegenden Winkel bilden, und jeweils
   mindestens zwei Stege an der gleichen oder nahezu gleichen Stelle
   einer Platte befestigt sind.

2. Schrägstegmehrfachplatte nach Anspruch 1 aus einem
   lichtdurchlässigen oder transparenten Kunststoff.

3. Schrägstegmehrfachplatte nach Anspruch 1 aus gegebenenfalls Verstärkerfüllstoff enthaltenden Polyacrylaten,
   Polymethylmethacrylaten, Polystyrol, aromatischen Polycarbonaten oder Polyamiden.

Le A 20 779

FIG.1a

FIG. 1b

FIG. 2

FIG. 3 a

FIG. 3 b

FIG. 3c

FIG. 3 d

FIG. 3 e

FIG. 3 f

## EUROPÄISCHER RECHERCHENBERICHT

Europäisches
Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | FR - A - 874 638 (KODAK)<br><br>* Seite 1, Zeilen 42-52; Seite 4, Zeilen 24-30; Figuren 5,6 *<br><br>-- | 1,2 | E 04 C 2/36<br>2/54 |
| X | FR - A - 1 116 248 (LE VITREX)<br><br>* Seite 1, Spalte 1, Zeilen 29-30; Spalte 2, Zeilen 9-33; Figuren 1,2 *<br><br>-- | 1,2,3 | |
| P,X | FR - A - 2 468 065 (MONTEDISON)<br><br>* Seite 3, Zeilen 21-38; Seite 4, Zeile 1; Seite 5, Zeilen 35-38; Figuren 1-3 *<br><br>------------ | 1,2,3 | RECHERCHIERTE SACHGEBIETE (Int Cl.³)<br><br>E 04 C |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-03-1982 | DALL'ANESE |

EPA form 1503.1 06.78